# EUROPEAN PATENT APPLICATION

(11) **EP 2 811 207 A1**
(43) Date of publication of application: **10.12.2014**
(21) Application number: 13170750.7
(22) Date of filing: 06.06.2013
(51) Int. Cl.: F16K 1/42, F01D 17/14

(54) **Valve assembly**

(71) Applicant: Alstom Technology Ltd, 5400 Baden (CH)
(72) Inventor: Tisler, Peter, H-1154 Budapest (HU)

(57) **Abstract**

The invention relates to an assembly for retaining an inner body (20) within an on orifice (16) of an outer body (10). An example of such an assembly is a valve diffuser within located within a valve inner casing. The retaining is achieved by a rod (30) extending through a passage (18) of the into a groove (24) of the inner body (20) so as to locate a tip portion (32) of the rod (30) within the groove (24) thereby retaining the inner body (10, 20) within the orifice (16).

## Description

### TECHNICAL FIELD

The present disclosure relates generally to fixing means for fixing a body within the cavity of a second body and more specifically to the fixing of diffusers in a valve body, in particular a steam valve body.

### BACKGROUND INFORMATION

On occasions there is a need to fix a body within another body. For example, in a valve assembly, it may be necessary to fix a diffuser within a casing, preferably in a removable way so that the diffuser may be replaced if worn or damaged.

Methods for fixing a body within another include peen lipping, shrink fitting and bolting. Each of these connection methods has their own disadvantages, for example, peen lipping requires special tools and it may be difficult to remove the inner body without damage. In contrast, shrink fitting requires strict controls as the thermal expansion coefficients of the joining bodies need to be specially selected. This creates the problem that material choice is limited as material selection needs to consider not only suitability for service but also relative expansion. While bolting may alleviate some problems, it creates additional problems such as the need to design the components to give access to the bolts. This may result in suboptimal design and the problem of loosening due to bolt creep, which, in particular, may be a problem in steam service.

There is therefore a need for alternative fixing means

### SUMMARY

An assembly is disclosed that provides an alternate means to removably fastening an inner body within an orifice of an outer body while overcome at least some problems of the known art.

This problem is at least partially addressed by means of the subject matters of the independent claims. Advantageous embodiments are given in the dependent claims.

Provided is an assembly that has an outer body, an inner body and a rod. The outer body has an orifice extending therethrough and at least one passage, extending, essentially perpendicular to a direction of extension of the orifice, through the outer body therethrough. The inner body has a contact face extending at least partially along an outer surface of the inner body that is shaped and sized to fit within the orifice so as to cover an opening of the passage as well as a groove with an opening in the contact face. The rod, with a tip portion configured to extend into the groove, is configured to slidably fit within the passage. The groove and the passage are in such a location that when the inner body is located in the orifice and the rod within the passage, the tip portion of the rod is capable of slidably extending from the passage into the groove so by retaining the inner body within the orifice.

In an aspect, the inner body includes a support portion on the inner body that limits how far the inner body is insertable in the orifice. This is achieved by the support portion having at least a part of its diameter larger than at least a part of the diameter of the orifice.

In a further aspect, the groove has at least two side walls. The first side wall is located towards the support portion while the second side wall is located distal from the support portion. Each of these side walls extend to the contact face thereby forming the opening. The second side wall may be angled relative to a centre line of the passage. In such as case, preferably, the tip portion includes a face that is angled to form a wedge that compliments the angle of the second side wall so that when the tip portion extends from the passage into the groove a force is exert by the rod on the inner body counter to that of the support portion thereby fixing and locking the inner body within the outer body.

In an aspect, the rod is cylindrical in shape. Irrespective of its shape, the tip portion of the rod preferably has a smaller radius than adjacent centre portions of the rod so by preventing the tip portion from being mechanically locked in the groove if deformed by locking forces. The radius decrease may be achieved by stepwise radius decreases, in the direction of the end of the rod, resulting in the smallest radius at an end point of the rod.

In an aspect, to aid removal of the rod from the passage, the rod may include a hollow portion at an end distal to that of the first tip portion.

In an aspect, at least a section of the passage distal from the orifice is tapped to enable the use of a screw, preferably a socket head cap screw, to retaining the tip portion in the groove by exerting a force on the rod in the direction of the passage.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings which by way of example illustrate exemplary embodiments of the present invention

### BRIEF DESCRIPTION OF THE DRAWINGS

By way of example, an embodiment of the present disclosure is described more fully hereinafter with reference to the accompanying drawings, in which:
Figure 1 is a perspective view of an exemplary embodiment applied to a valve;
Figure 2 is a cut away view of the exemplary embodiment of Fig. 1 showing a passage through the outer body;
Figure 3 is a perspective view of a rod of the exemplary embodiment of Fig. 1; and
Figure 4 is a perspective view of a screw of the exemplary embodiment of Fig. 1.

### DETAILED DESCRIPTION

Exemplary embodiments of the present disclosure are now described with references to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiments disclosed herein.

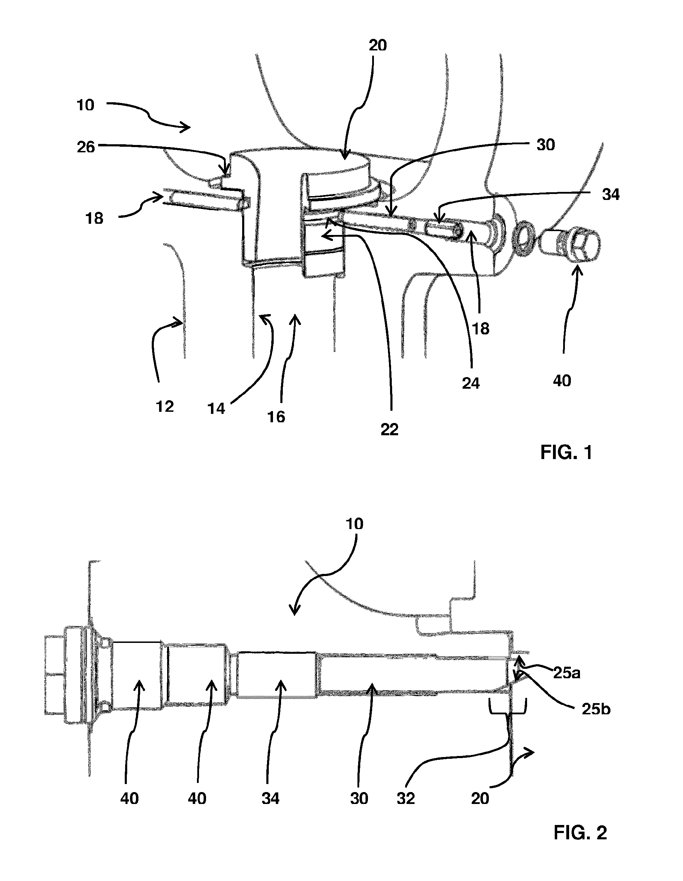

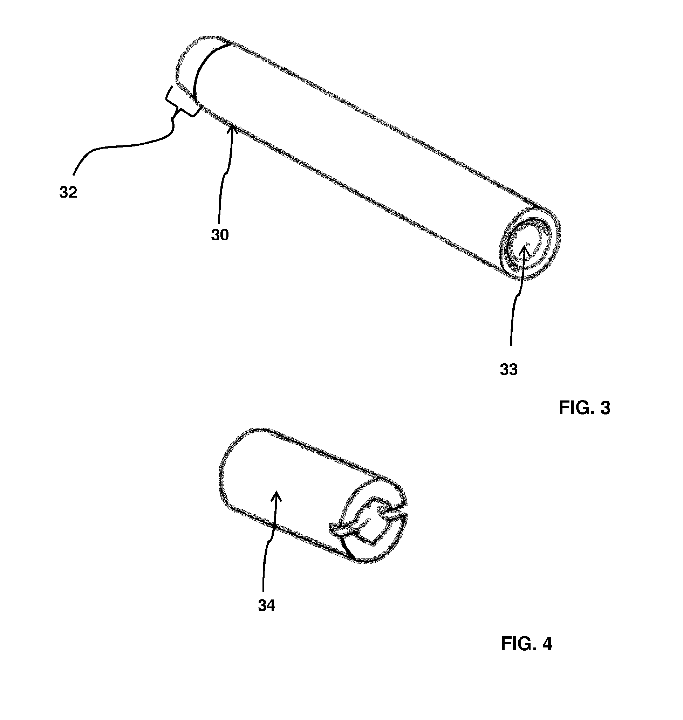

Fig. 1 shows an implementation of an exemplary embodiment of an assembly applied to a steam valve. The assembly comprises an outer body 10 that has an orifice 16 there through, and a passage 18 that extends through a side of the outer body 10 and opens out into the orifice 16. An inner body 20 that is configured to at least partially fit in the orifice 16, has a contact face 22 that, when fitted in the assembly, lies within the orifice 16 and has a groove 24 with an opening. By aligning the passage 18 with the groove 24 a rod 30 can be inserted in and through the passage so that a tip portion 32 (Fig. 2, 3) of the rod 30 extends into the groove 24. By this means, the inner body 20 can be retained inside of the orifice 16 of the outer body 10.

In the exemplary embodiment of a valve where the outer body 10 is a valve casing and the inner body 20 a diffuser, the qualifier "outer" does not restrict the body to being that of an outer casing or part thereof. Instead, "outer" is a relative reference relative to the inner body 20.

Fig. 1 shows further features of the assembly that may be used to enhance the retention of the inner body 20 inside of the outer body 10. For example, in an exemplary embodiment, the inner body 20 includes a support portion 26 that is configured to limit the extension of the inner body 20 into the orifice 16. This may be achieved by the support portion 26 forming an outer ring around the inner body 20 that has a larger diameter than the opening of the orifice 16. Alternatively, the support portion 26 may extend from discrete points around the inner body 20 to form support legs that have a large diameter than at least a portion of the outer body 10.

Although the support portion 26 in the exemplary embodiment shown in Fig. 1 is an integral part of the inner body 20, the support portion 26 may be either fixingly attached to the inner body 20 or else form a physically separate part that in each case fulfils the requirement of limiting the movement of the inner body 20 into the orifice.

In a complementary exemplary embodiment to that in which the inner body 20 includes a support portion 26, the groove 24 in the inner body 20 has side walls 25 in which the first side wall 25a is located towards the support portion while the second side wall 25b is located distal from the support portion 26. These side walls 25 each extend to the contact face thereby forming the opening of the groove 24 on the contact face 22. In this arrangement, the second side wall 25b is angled relative to a centre line of the passage. The tip portion of the rod 30 is also angled so that is forms a wedge that complements the angle of the second side wall 25b. By this complementary angulation, as can be seen in Fig. 2, when the tip portion extends from the passage 18 into the groove 24, a force is exerted by the rod 30 on the inner body 20 that is countered by the support portion thereby clamping the inner body 20 within the outer body 10.

In an independent exemplary embodiment shown in Fig. 1 the passage 18 is cylindrical and the rod 30 has a complementary cylindrical shape. In a not shown exemplary embodiment, both the rod 30 and the passage 18 are square, rectangular or have otherwise shaped forms that have edges which limit the orientation of the rod 30 within the passage 18 and thus prevent rotation so by ensuring alignment and orientation of the tip portion 32 of the rod 30 with the side walls of the groove 24.

In an exemplary embodiment shown in Fig. 3, in addition to wedge shaped angulation of the tip portion of the rod 30, the tip portion of the rod 30 has a smaller radius than adjacent centre portions of the rod 30. This helps prevent the tip portion 32 from being mechanically locked inside of the groove. This radius reduction may take the form of a stepwise or else smooth decrease in the radius of the tip portion 32 as it extends to the end of the rod 30. In each case, the decrease results in the end point of the tip portion 32 having a smaller radius that the average radius of the body of the rod 30.

In an exemplary embodiment shown in Fig. 2, the tip portion 32 may be held into the groove 24 by means of a screw 34 located in the passage 18. This is achieved by the screw 34 having threads that complement the threads of the tapping of the passage 18. By rotating the screw 34, a force parallel to the extension of the passage 18 can be applied to a rod 30 when it is inserted in the passage 18 thus forcing and retaining a tip portion 32 of the rod 30 in the groove 24.

Optionally, the open end of the passage 18 formed in the outer surface 12 of the outer body 10 may be filled with a plug 40.

Despite the use of tip portion 32 arrangements that present jamming or wedging of the tip portion 32 in the orifice 16 it may nonetheless be difficult remove the rod 30 from the passage 18. To facilitate the removal, as shown in Fig. 3 the rod 30 an exemplary embodiment includes a hollow portion 33 at and end distal from the tip portion 32 that is configured in terms of opening size and shape to enable an extraction tool may be inserted and used to grip the inner surfaces of the hollow portion 33, thereby enabling the extraction tool to pull the rod 30 from the passage 18.

An important feature of embodiments that use a screw 34 to retain the rod 30 in the passage 18 is that is the passage 18 and screw 34 must be configured to enable the screw 34 to be rotated within a section of the passage 18 that is tapped. To facility this, the screw 34 is preferably a socket head cap screw 34 as is known in the art. In this configuration, the screw exerts a force on the rod in the direction of the passage 18 when it is tightened, the rod then transfers this force to the inner body in the direction of the orifice 16. In this way the screw 34, the rod 30, the inner body 14 and the outer body 10 make a closed force loop maintained by the elasticity of interacting components and the force initially generated by tightening the screw 34. To ameliorate any long term elastic behaviour of the screw 34 and the rod 39 that may reduce the force on the rod 39 an exemplary embodiment includes an additional component there between, such as a spring.

Although the disclosure has been herein shown and described in what is conceived to be the most practical exemplary embodiment, it will be appreciated by those skilled in the art that the present disclosure can be embodied in other specific forms. The presently disclosed embodiments are therefore considered in all respects to be illustrative and not restrictive. The scope of the disclosure is indicated by the appended claims rather that the foregoing description and all changes that come within the meaning and range and equivalences thereof are intended to be embraced therein.

**REFERENCE NUMBERS**

| | |
|---|---|
| 10 | outer Body |
| 12 | outer surface |
| 14 | inner surface |
| 16 | orifice |
| 18 | passage |
| 20 | inner body |
| 22 | contact face |
| 24 | groove |
| 25a,b | side walls |
| 26 | support portion |
| 30 | rod |
| 32 | tip portion |
| 33 | hollow portion |
| 34 | screw |
| 40 | plug |

## Claims

1. An assembly comprising:
an outer body (10) having:
an orifice (16) extending therethrough; and
at least one passage (18), extending essentially perpendicular to a direction of extension of the orifice (16) through the outer body (10) therethrough,
an inner body (20) having:
a contact face (22) extending at least partially along an outer surface (12) of the inner body (20) that is shaped and sized to fit within the orifice (16) so as to cover an opening of the or each passage (18),
a groove (24) with an opening in the contact face (22); and
a rod (30) configured to slidably fit within the passage (18), having a tip portion (32) at a distal end for extending into the groove (24),
wherein the groove (24) and passage (18) are location such that when the inner body (20) is located in the orifice (16) and the rod (30) within the passage (18), the tip portion (32) of the rod (30) is capable of slidably extending from the passage (18) into the groove (24) so by retaining the inner body (10, 20) within the orifice (16).

2. The assembly of claim 1 further comprising a support portion (26) on the inner body (20) that limits how far the inner body (20) is insertable in the orifice (16) by at least a part of diameter of the support portion (26) being larger than at least a part of the diameter of the orifice (16).

3. The assembly of claim 2 wherein the groove (24) comprises:
a first side wall (25a) towards the support portion (26); and
a second side wall (25b), distal from the support portion (26),
wherein each side wall (25) extends to the contact face (22) thereby forming the opening.

4. The assembly of claim 3 wherein the second side wall (25b) is angled relative to a centre line of the passage (18).

5. The assembly of claim 4 wherein the tip portion (32) includes a surface that is angled to form a wedge that compliments the angle of the second side wall (25b) so that when the tip portion (32) is extended from the passage (18) into the groove (18, 24) a force is exert by the rod (30) on the inner body (10, 20) that is countered by the support portion (26).

6. The assembly of claim 1 wherein the rod (30) is cylindrical in shape.

7. The assembly of claim 6 wherein the tip portion (32) of the rod (30) has a smaller radius than adjacent centre portions of the rod (30).

8. The assembly of claim 7 wherein the tip portion (32) radius decreases stepwise.

9. The assembly of claim 7 wherein the tip portion (32) has a decreasing radius in the direction of the end of the rod (30).

10. The assembly of claim 1 wherein an end of the rod (30), distal from the first tip portion (32), includes a hollow portion (33) for facilitating the removal of the rod (30) from the passage (18).

11. The assembly of claim 1 wherein a section of the passage (18) towards an end distal from the orifice (16) is tapped.

12. The assembly of claim 11 further including a screw (34) with threads that complement the threads of the tapping of the passage (18) to enable the screw (34) to retain the tip portion (32) into the groove (24) by exerting a force on the rod (30) in the direction of the passage (18).

13. The assembly of claim 12 wherein the screw (34) is a socket head cap screw (34).

14. The assembly of claim 1 further including a plug (40) is located in and end of the passage (18) distal from the orifice (16).

15. The assembly of claim any one of claims 1 to 14 wherein the outer body (10) is a valve casing and the inner body (20) is a valve diffuser.
